# FASCICULE DE BREVET EUROPEEN

(11) **EP 1 255 032 B1**
(45) Date de publication et mention de la délivrance du brevet: **02.01.2004**
(21) Numéro de dépôt: 02290779.4
(22) Date de dépôt: 28.03.2002
(51) Int. Cl.: F02C 7/042, B64D 33/02

(54) **Manche à air et engin volant, en particulier un missile, muni d'une telle manche à air**
Lufteinlasskanal und Flugkörper, insbesondere Rakete, mit einem solchen Lufteinlasskanal
Air intake and flying vehicle, in particular a missile, with such air intake

(30) Priorité: 30.04.2001 FR 0105800
(43) Date de publication de la demande: 06.11.2002
(73) Titulaire: MBDAM, 75116 Paris (FR)
(72) Inventeur: Demay, Jean-Paul, 94260 Fresnes (FR); Carton, Laurent, 18400 Saint-Florent sur Cher (FR)
(74) Mandataire: Bonnetat, Christian

(56) Documents cités:
- GB-A- 870 182
- US-A- 3 242 671
- US-A- 3 535 882
- US-A- 5 078 341
- PATENT ABSTRACTS OF JAPAN vol. 2000, no. 10, 17 novembre 2000 (2000-11-17) & JP 2000 192850 A (KAWASAKI HEAVY IND LTD), 11 juillet 2000 (2000-07-11)

## Description

La présente invention concerne une manche à air, ainsi qu'un engin volant, en particulier un missile, qui est muni d'une telle manche à air.

On sait qu'une manche à air qui est montée sur un engin volant tel qu'un missile par exemple, est destinée à véhiculer de l'air en vol, de l'extérieur de l'engin volant vers des moyens internes, généralement des moyens destinés à la propulsion dudit engin volant, tels qu'une chambre de combustion d'un statoréacteur par exemple. De telles manches à air sont décrites dans de très nombreux documents, en particulier dans les brevets JP2000192850, FR-2 755 182, DE-30 03 004 et EP-0 474 594, et comprennent généralement une conduite allongée de section transversale sensiblement rectangulaire.

Dans le cas d'un statoréacteur, on sait que la qualité du fonctionnement du statoréacteur et son efficacité dépendent en grande partie de l'importance du débit de l'air qui est ingéré, c'est-à-dire qui est véhiculé par la ou les manches à air dans la chambre de combustion du statoréacteur, dans laquelle est engendrée une combustion d'un mélange d'air et de combustible. Le débit d'air ingéré dépend bien entendu de la surface de la section transversale de la manche à air (ou des manches à air) qui est prévue. Bien entendu, plus cette surface est grande, plus le débit est important.

Toutefois, il n'est pas souhaitable de prévoir sur un engin volant des surfaces de section transversale de manche à air trop grandes, notamment pour des raisons d'encombrement, de masse et d'aérodynamisme.

De plus, en particulier lorsqu'elle est destinée à alimenter en air des moyens de propulsion de type statoréacteur, une manche à air doit présenter de bonnes performances, en termes d'efficacité et de débit, dans un grand domaine de vol, et doit être adaptée au nombre de Mach et à l'altitude de vol.

En effet, les vols à basse altitude ne peuvent être envisagés qu'à des nombres de Mach modérés, pour des raisons de tenue des matériaux en température, alors qu'à haute altitude, le nombre de Mach doit être nettement supérieur pour permettre, en raison de la raréfaction de l'air, le maintien d'une pression dynamique suffisante pour assurer la sustentation et/ou l'accélération de l'engin volant.

Aussi, pour obtenir une forte poussée sur toute la trajectoire de l'aéronef, tant à basse qu'à haute altitude, il est nécessaire de fournir aux moyens de propulsion un débit très variable d'air de combustion.

Pour atteindre cet objectif, une solution connue est de faire varier la section transversale d'entrée de la manche à air. On connaît différentes manches à air à sections d'entrées variables. En particulier, par le brevet EP-0 646 525, on connaît une entrée d'air supersonique et hypersonique, bidimensionnelle à géométrie variable, pour l'air de combustion d'un moteur d'aéronef. Cette entrée d'air est placée sous la voilure ou le fuselage de l'aéronef, et comprend deux volets principaux disposés en vis-à-vis, dont les parois internes, en regard l'une de l'autre, sont aménagées en rampes de compression. Chacun desdits volets est mobile autour d'un axe de pivotement situé au voisinage d'une paroi de l'entrée d'air qui prolonge vers l'arrière le volet principal considéré. De plus, une rampe, mobile autour d'un axe de pivotement parallèle aux axes de pivotement des volets principaux et situé à proximité de son bord d'attaque, est disposée en amont du volet principal le plus proche de la voilure ou du fuselage. Cette rampe amont délimite avec ledit volet principal un piège à couche limite, de section variable.

Une telle entrée d'air a pour avantage que la rampe amont orientable, dévie l'écoulement d'air vers le plan médian de l'entrée d'air et permet de ménager et de maintenir, jusqu'à la phase de fonctionnement en superstatoréacteur, un piège à couche limite de section variable de dimension satisfaisante.

Toutefois, comme les volets principaux et la rampe amont, ainsi que les moyens d'actionnement, sont agencés à l'intérieur de l'entrée d'air, ils perturbent nécessairement l'écoulement. De plus, comme cette solution connue prévoit un nombre élevé d'éléments différents (volets principaux, rampe, ...), elle est complexe, encombrante et coûteuse. En outre, en raison de la pression élevée engendrée par l'air à haut débit qui pénètre dans l'entrée d'air et du mode de solidarisation prévu, comprenant uniquement deux zones de solidarisation (pivot et actionneur) pour chacun de ces éléments pivotants, on peut douter de la stabilité de ces éléments sur tout le domaine de vol.

La présente invention a pour objet de remédier à ces inconvénients. Elle concerne une manche à air simple, efficace et de coût réduit, permettant de véhiculer de l'air à un débit variable.

A cet effet, selon l'invention, ladite manche à air du type comportant une conduite allongée qui présente une extrémité d'entrée d'air et une extrémité de sortie d'air et qui comprend au moins une face sensiblement plane, est remarquable en ce qu'elle comporte de plus :
- une rampe mobile comprenant une structure allongée qui est, au moins partiellement, sensiblement plane, qui est agencée à l'extérieur sur ladite face plane de la conduite, et qui est susceptible d'être déplacée par translation sur ladite face plane le long de ladite conduite et d'être amenée dans l'une d'au moins deux positions stables, dans lesquelles elle est fixe par rapport à ladite conduite :
   . une position rentrée, dans laquelle elle est en retrait par rapport à ladite extrémité d'entrée d'air, sur ladite face plane de la conduite ; et
   . une position sortie, dans laquelle, tout en étant partiellement agencée sur ladite face plane, elle dépasse la conduite au niveau de son extrémité d'entrée d'air ; et
- des moyens d'actionnement commandables pour déplacer ladite rampe mobile et l'amener dans l'une desdites positions stables.

Ainsi, grâce à l'invention, pour une même condition d'utilisation de la manche à air, on peut obtenir deux débits d'air différents, selon la position (rentrée ou sortie) dans laquelle est amenée la rampe mobile. En effet :
- dans la position rentrée, la rampe est en retrait par rapport à l'extrémité d'entrée d'air de la conduite et, par conséquent, n'influe pas sur l'air qui pénètre dans la manche à air de sorte que le débit d'air est défini par la section transversale (constante) de ladite extrémité d'entrée d'air, ainsi que bien entendu par les conditions d'utilisation (vitesse de l'air, ...) ;
- tandis que, dans la position sortie, la rampe dépasse la conduite au niveau de son extrémité d'entrée (d'air) de sorte qu'elle agit sur l'air en amont de ladite extrémité d'entrée et guide une partie de cet air vers ladite extrémité d'entrée de manière à augmenter la quantité d'air pénétrant dans la manche à air, ainsi que la pression, ce qui a pour effet d'augmenter le débit de l'air (par rapport au débit existant dans la position rentrée).

Par conséquent, en fonction du débit d'air qui est nécessaire, on amène la rampe dans l'une ou l'autre desdites positions stables.

De plus, comme la rampe est agencée sur la face externe de ladite face plane de la conduite, elle ne perturbe pas l'écoulement de l'air à l'intérieur de la manche à air.

En outre, comme on le verra plus en détail ci-dessous, la présente invention présente également les avantages suivants :
- elle est compacte ;
- le déplacement de la rampe est réalisée de façon précise et
- la rampe est très stable dans ses positions rentrée et sortie.

On notera que dans le cadre de la présente invention, il est bien entendu envisageable de prévoir plus de deux positions stables, en prévoyant une ou plusieurs positions stables (sorties) qui sont intermédiaires entre la position rentrée et une position sortie extrême.

Dans un mode de réalisation préféré, lesdits moyens d'actionnement comportent :
- un système à rail et glissière coopérants, destiné à rendre la rampe solidaire de ladite conduite, tout en permettant un déplacement de ladite rampe ; et
- des moyens de déplacement et de fixation de ladite rampe mobile.

Ceci permet d'obtenir des positions (rentrée et sortie) très stables et un déplacement maîtrisé et également stable de la rampe, notamment par rapport à la solution usuelle précitée (brevet EP-0 646 525 par exemple) dans laquelle les éléments (volet, rampe) qui agissent sur l'air sont pivotables (et non pas déplaçables par translation) et sont maintenus généralement uniquement à deux endroits, au niveau d'un pivot et d'un actionneur.

En outre, de façon avantageuse, lesdits moyens de déplacement et de fixation de la rampe mobile comportent :
- un motoréducteur, de type usuel, qui est susceptible d'être commandé électriquement, et qui est apte à déplacer la rampe mobile à l'aide d'un ensemble formé d'un pignon et d'une crémaillère, pour l'amener dans l'une desdites positions stables, et à fixer ladite rampe par rapport à ladite conduite dans l'une desdites positions stables ; et
- des moyens de commande pour commander électriquement ledit motoréducteur.

Ce mode de réalisation présente notamment les avantages suivants :
- une absence d'entretien (pas d'opérations telles qu'un changement de joint ou un contrôle périodique lourd par exemple, comme avec un système hydraulique) ;
- une durée de vie élevée ; et
- une possibilité d'utilisations multiples (à la différence d'un système pyrotechnique par exemple).

Dans ce cas, de préférence, lesdits moyens de commande, pour commander électriquement ledit motoréducteur, sont reliés par une liaison électrique à ce dernier et sont agencés à distance dudit motoréducteur. Par conséquent, seul le motoréducteur qui doit être agencé à proximité de la rampe pour pouvoir fonctionner et agir comme prévu est éventuellement encombrant, les moyens de commande pouvant être agencés quant à eux à un endroit où ils ne gênent pas.

Par ailleurs, avantageusement, ladite rampe comporte une première partie plane destinée à être agencée sur ladite face plane de la conduite et au moins une seconde partie qui est raccordée à ladite première partie plane de façon sensiblement orthogonale et qui présente au moins une ouverture traversante qui, dans ladite position sortie de la rampe, est située au-delà de la conduite au niveau de l'extrémité d'entrée d'air. Cette ouverture permet d'évacuer une couche limite d'air.

La présente invention concerne également un engin volant, en particulier un missile, comportant au moins une manche à air pour amener de l'air de l'extérieur dans ledit engin volant, notamment à des moyens de propulsion tels qu'un statoréacteur par exemple.

Selon l'invention, ledit engin volant est remarquable en ce que ladite manche à air est du type de celle précitée.

Les figures du dessin annexé feront bien comprendre comment l'invention peut être réalisée. Sur ces figures, des références identiques désignent des éléments semblables.

La figure 1 montre schématiquement et partiellement un engin volant muni d'une manche à air conforme à l'invention.

Les figures 2 et 3 sont des vues schématiques, en perspective, d'une manche à air comportant une rampe mobile qui est située, respectivement, dans une position rentrée et dans une position sortie.

La figure 4 est une vue schématique en perspective d'une rampe mobile conforme à l'invention.

La figure 5 montre schématiquement un motoréducteur destiné à l'entraînement d'une rampe mobile.

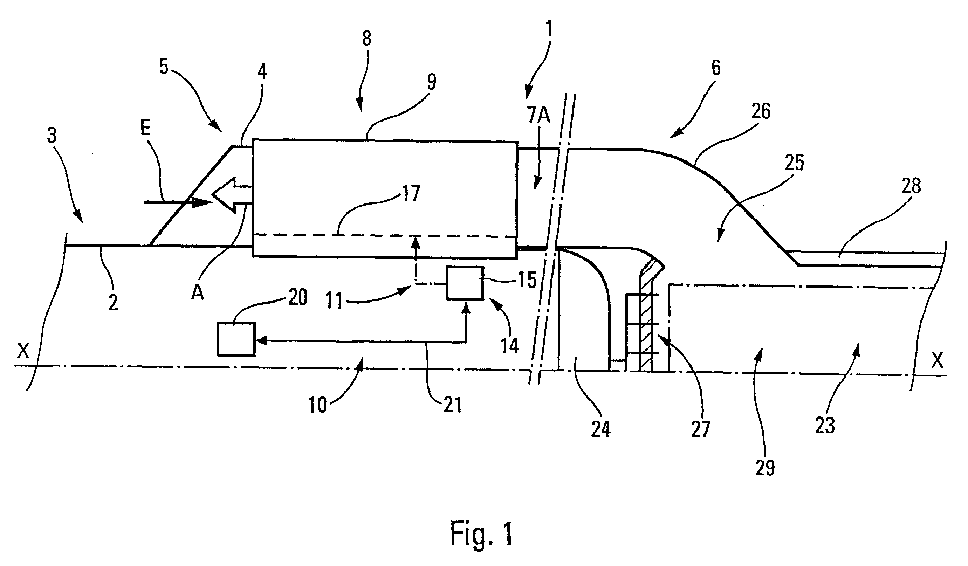

La manche à air 1 conforme à l'invention et représentée schématiquement sur les figures 1 à 3 est montée sur la structure 2 (fuselage, voilure, ...) d'un engin 3, notamment un engin volant tel qu'un missile, et est destinée à véhiculer de l'air de l'extérieur dudit engin 3 vers l'intérieur de sa structure 2, notamment pour alimenter la chambre de combustion d'un moteur de l'engin 3.

Ladite manche à air 1 comporte, de façon connue, une conduite 4 allongée, par exemple métallique, qui présente une extrémité 5 d'entrée d'air et une extrémité 6 de sortie d'air et qui comprend au moins une face 7A sensiblement plane.

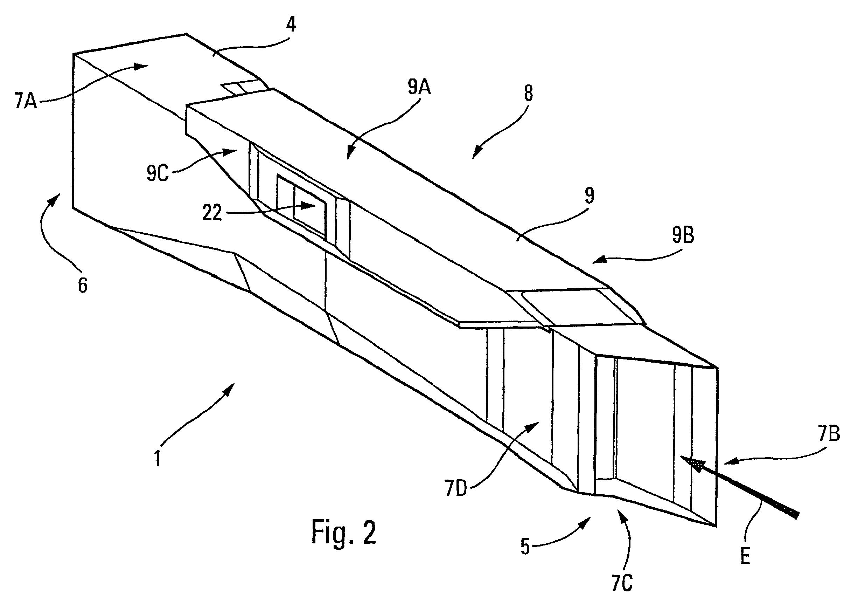

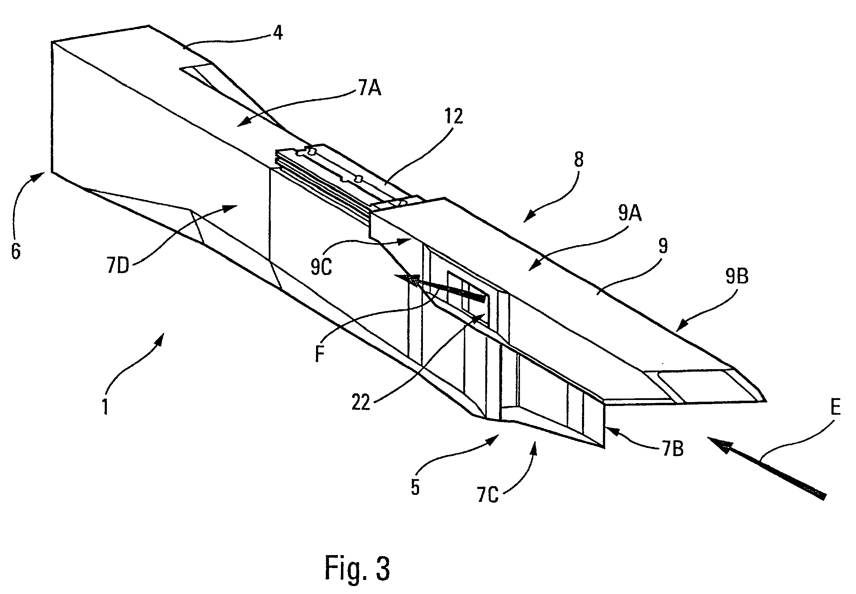

La section transversale de ladite conduite 4 peut être de forme quelconque. Toutefois, dans un mode de réalisation préféré représenté sur les figures 2 et 3, ladite conduite 4 présente une section transversale sensiblement rectangulaire et comprend quatre faces 7A, 7B, 7C, 7D sensiblement planes. La conduite 4 est fixée par la face 7B sur la structure 2. Il est également envisageable, dans le cadre de la présente invention, bien que non représenté, que la structure 2 de l'engin 3 constitue ou forme directement une face (face 7B) de la conduite 4.

Selon l'invention, ladite manche à air 1 comporte de plus :
- une rampe mobile 8 comprenant une structure allongée 9 qui comporte au moins une partie 9A plane, qui est agencée à l'extérieur sur ladite face plane 7A et qui est susceptible d'être déplacée par translation sur ladite face plane 7A le long de ladite conduite 4 et d'être amenée dans l'une de deux positions stables, dans lesquelles elle est fixe par rapport à ladite conduite 4, à savoir :
   . une position rentrée représentée sur la figure 2, dans laquelle elle est en retrait par rapport à ladite extrémité d'entrée d'air 5, sur la face plane 7A de la conduite 4 ; et
   . une position sortie représentée sur la figure 3, dans laquelle, tout en étant partiellement agencée sur ladite face plane 7A, elle dépasse la conduite 4 au niveau de son extrémité d'entrée d'air 5 ; et
- des moyens d'actionnement 10 commandables, pour déplacer ladite rampe mobile 8 et l'amener dans l'une desdites positions stables.

Pour amener la rampe mobile 8 de la position rentrée dans la position sortie, les moyens 10 la déplacent dans le sens illustré par une flèche A représentée sur la figure 1 .

Ainsi, grâce à l'invention, pour une même condition d'utilisation de la manche à air 1, on peut obtenir deux débits d'air différents, selon la position (rentrée ou sortie) dans laquelle se trouve la rampe mobile 8. En effet :
- dans la position rentrée (figure 2), la rampe 8 est en retrait par rapport à l'extrémité d'entrée d'air 5 de la conduite, et par conséquent, n'influe pas sur l'air qui pénètre dans la manche à air 1, comme représenté par une flèche E sur les figures 1 à 3, de sorte que le débit d'air est défini par la section transversale (constante) de ladite extrémité d'entrée d'air 5 de la conduite 4, ainsi que bien entendu par les conditions d'utilisation (vitesse de l'air, ...) ;
- tandis que, dans la position sortie (figure 3), la rampe 8 dépasse la conduite 4 au niveau de son extrémité d'entrée 5 de sorte qu'elle agit sur l'air en amont (dans le sens de la flèche E) de ladite extrémité d'entrée 5 et guide une partie de cet air vers ladite extrémité d'entrée 5 de manière à augmenter la quantité d'air pénétrant dans la manche 1, ainsi que la pression, ce qui a pour effet d'augmenter le débit de l'air (par rapport au débit existant dans la position rentrée).

Par conséquent, en fonction du débit d'air qui est nécessaire ou souhaitable, on amène la rampe 8 dans l'une ou l'autre desdites positions stables.

De plus, comme la rampe 8 est agencée sur la face externe de ladite face plane 7A de la conduite 4, elle ne perturbe pas l'écoulement de l'air à l'intérieur de la manche à air 1.

En outre, comme on le verra plus en détail ci-dessous, la présente invention présente également les avantages suivants :
- elle est compacte ;
- le déplacement de la rampe 8 est réalisée de façon précise ; et
- la rampe 8 est très stable dans ses positions rentrée et sortie.

On notera que dans le cadre de la présente invention, il est bien entendu envisageable de prévoir plus de deux positions stables, en prévoyant une ou plusieurs positions stables (sorties) qui sont intermédiaires entre la position rentrée de la figure 2 et une position sortie extrême, par exemple la position de la figure 3.

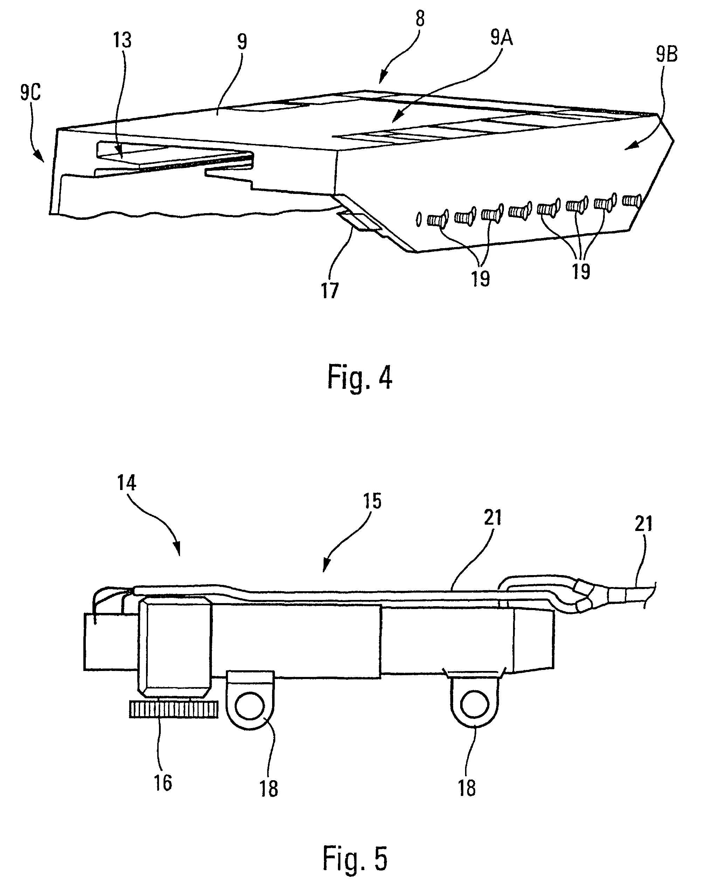

Selon l'invention, lesdits moyens d'actionnement 10 comportent :
- un système 11 destiné à rendre la rampe 8 solidaire de ladite conduite 4, tout en permettant un déplacement de ladite rampe 8. Ce système 11 comporte, à cet effet, un rail 12 qui est fixé sur la face 7A de la conduite 4, comme représenté sur la figure 3, et qui coopère avec une glissière 13 qui est formée dans la structure 9 de la rampe 8, comme représenté partiellement sur la figure 4 ; et
- des moyens 14 de déplacement et de fixation de ladite rampe mobile 8.

Lesdits moyens 14 de déplacement et de fixation de la rampe mobile 8 comportent :
- un motoréducteur 15 représenté sur la figure 5, qui est susceptible d'être commandé électriquement, et qui est apte à déplacer la rampe mobile 8 à l'aide d'un ensemble formé d'un pignon 16 et d'une crémaillère 17, pour l'amener dans l'une desdites positions stables, et à fixer ladite rampe 8 par rapport à ladite conduite 4 dans l'une desdites positions stables. A cet effet, le motoréducteur 15 est fixé sur la conduite 4 de la manche à air 1 par l'intermédiaire d'anneaux 18 (figure 5) et de vis non représentées. Ledit motoréducteur 15 entraîne en rotation le pignon 16 qu'il porte. Ce dernier coopère, de façon usuelle, avec la crémaillère 17 qui est fixée par des moyens de fixation 19 (vis, ...) à l'intérieur d'une face (ou paroi) 9B de la rampe 8 (figure 4) ; et
- des moyens de commande 20 pour commander électriquement ledit motoréducteur 15, par l'intermédiaire d'un câble électrique 21.

Comme représenté sur la figure 1, les moyens de commande 20 sont agencés à distance dudit motoréducteur 15, de préférence à un endroit où ils ne gênent pas. Par conséquent, seul le motoréducteur 15 est éventuellement encombrant.

Bien entendu, les moyens de commande 20 commandent un déplacement de la rampe 8 en fonction du besoin de débit d'air. Ce besoin de débit d'air peut notamment dépendre de la vitesse de l'engin 3 et de son altitude, dans le cas d'un engin volant. Les moyens de commande 20 comportent donc des moyens appropriés non représentés, pour déterminer ces différents paramètres et pour commander automatiquement en correspondance le déplacement de la rampe 8. Il est également envisageable, dans un mode de réalisation particulier, que ces moyens de commande 20 soient actionnables manuellement par un opérateur.

Par ailleurs, la rampe 8 comporte de plus, comme représenté sur les figures 2 et 3, au moins une face 9C qui est adjacente à la face plane 9A et qui est par exemple, au moins partiellement, orthogonale à cette dernière. Cette face 9C présente au moins une ouverture traversante 22 qui sert de piège à couche limite dans la position sortie de la rampe 8, comme représenté par une flèche F sur la figure 3 qui illustre l'éjection de l'air de ladite couche limite.

En plus des avantages précités, la manche à air 1 conforme à l'invention présente, de plus, notamment les avantages suivants :
- une absence d'entretien (pas d'opérations telles qu'un changement de joint ou un contrôle périodique lourd, comme avec un système hydraulique) ;
- une durée de vie élevée ; et
- une possibilité d'utilisations multiples (à la différence d'un système pyrotechnique par exemple).

La manche à air 1 conforme à l'invention peut être appliquée à de nombreux engins 3, mobiles ou non, pour véhiculer de l'air de l'extérieur de l'engin 3 vers l'intérieur. Toutefois, dans un mode de réalisation préféré, on applique la manche à air 1 à un engin volant 3 de type missile qui est propulsé par un statoréacteur, comme représenté sur la figure 1.

Dans ce cas, de façon connue, le corps (cylindrique) 2 du missile, d'axe X-X, contient généralement, entre autres, les appareils et charges usuels (qui ne sont pas représentés) et un réservoir de combustible 24, destiné à l'alimentation du statoréacteur et fixé à la partie arrière dudit corps 2. Le statoréacteur comporte une chambre de combustion 23, se terminant à l'arrière par une tuyère d'éjection (non représentée) et reliée, vers l'avant, à une pluralité de manches à air 1. Les manches à air 1 sont disposées à la périphérie du corps 2 et elles sont solidaires de celui-ci. Chacune d'elles, vers l'avant, comporte donc une entrée d'air 5 correspondante et, vers l'arrière, débouche dans la partie avant de la chambre de combustible 23 par un orifice correspondant 25. Un coude 26 est prévu dans chaque manche à air 1 pour raccorder la partie de celle-ci fixée à la paroi extérieure du corps 2 à l'orifice 25 correspondant de la chambre de combustion 23. Au voisinage de la partie avant de la chambre de combustion 23 est prévu un dispositif 27 d'injection de combustible. Le dispositif 27 est commandé par un dispositif d'alimentation et de régulation de combustible (non représenté) porté par le corps 2 et relié au réservoir 24. De plus, un revêtement de protection thermique 28 est prévu sur les parois intérieures de la chambre de combustion 23. L'engin volant 3 peut également comporter un propulseur auxiliaire commandable 29 (par exemple de la poudre) pour la propulsion dudit engin volant 3 avant la mise en fonctionnement du statoréacteur. Le fonctionnement d'un tel engin volant ou missile 3 (qui n'est pas impliqué par l'invention) est usuel et connu, et n'est donc pas décrit davantage.

## Revendications

1. Manche à air pour véhiculer de l'air, ladite manche à air (1) comportant :
- une conduite allongée (4) qui présente une extrémité (5) d'entrée d'air et une extrémité (6) de sortie d'air et qui comprend au moins une face (7A) sensiblement plane ;
- une rampe mobile (8) comprenant une structure allongée (9) qui est, au moins partiellement, sensiblement plane et qui est susceptible d'être déplacée par translation sur ladite face plane (7A) le long de ladite conduite (4) ; et
- des moyens d'actionnement (10) commandables, pour déplacer ladite rampe mobile (8),
**caractérisée en ce que** ladite structure allongée (9) de la rampe mobile (8) est agencée à l'extérieur sur ladite face plane (7A) de la conduite (4), et **en ce que** ladite rampe mobile (8) est susceptible d'être amenée, par l'intermédiaire desdits moyens d'actionnement (10), dans l'une de deux positions stables, dans lesquelles elle est fixe par rapport à ladite conduite (4) :
- une position rentrée, dans laquelle elle est complètement en retrait par rapport à ladite extrémité (5) d'entrée d'air, sur ladite face plane (7A) de la conduite (4) ; et
- une position sortie, dans laquelle, tout en étant partiellement agencée sur ladite face plane (7A), elle dépasse la conduite (4) au niveau de son extrémité (5) d'entrée d'air.

2. Manche à air selon la revendication 1,
**caractérisée en ce que** lesdits moyens d'actionnement (10) comportent :
- un système (11) à rail (12) et glissière (13) coopérants, destiné à rendre la rampe (8) solidaire de ladite conduite (4), tout en permettant un déplacement de ladite rampe (8) ; et
- des moyens de déplacement et de fixation (14) de ladite rampe mobile (8).

3. Manche à air selon la revendication 2,
**caractérisée en ce que** lesdits moyens de déplacement et de fixation (14) de la rampe mobile (8) comportent :
- un motoréducteur (15) susceptible d'être commandé électriquement, et apte à déplacer la rampe mobile (8) à l'aide d'un ensemble formé d'un pignon (16) et d'une crémaillère (17), pour l'amener dans l'une desdites positions stables, et à fixer ladite rampe (8) par rapport à ladite conduite (4) dans l'une desdites positions stables ; et
- des moyens de commande (20) pour commander électriquement ledit motoréducteur (15).

4. Manche à air selon la revendication 3,
**caractérisée en ce que** lesdits moyens de commande (20), pour commander électriquement ledit motoréducteur (15), sont reliés par une liaison électrique (21) à ce dernier et sont agencés à distance dudit motoréducteur (15).

5. Manche à air selon l'une quelconque des revendications précédentes,
**caractérisée en ce que** ladite rampe (8) comporte une première partie plane (9A) destinée à être agencée sur ladite face plane (7A) de la conduite et au moins une seconde partie (9B) qui est raccordée à ladite première partie plane (9A) de façon sensiblement orthogonale et qui présente au moins une ouverture traversante (22) qui, dans ladite position sortie de la rampe (8), est située au-delà de la conduite (4) au niveau de l'extrémité (5) d'entrée d'air.

6. Engin volant, en particulier un missile, comportant au moins une manche à air (1) pour amener de l'air de l'extérieur dans ledit engin volant (3),
**caractérisé en ce que** ladite manche à air (1) est du type de celle spécifiée sous l'une quelconque des revendications 1 à 5.

## Claims

1. Air intake for conveying air, the said air intake (1) comprising:
- an elongate duct (4) which has an air inlet end (5) and an air outlet end (6) and which has at least one roughly planar face (7A);
- a moving ramp (8) comprising an elongate structure (9) which is, at least in part, roughly planar and which is able to be moved in translation over the said planar face (7A) along the said duct (4); and
- operable actuating means (10) for moving the said moving ramp (8),
**characterized in that** the said elongate structure (9) of the moving ramp (8) is arranged on the outside on the said planar face (7A) of the duct (4) and **in that** the said moving ramp (8) can be brought, by the said actuating means (10), into one of two stable positions in which it is stationary with respect to the said duct (4) :
- a retracted position, in which it is completely set back from the said air inlet end (5), on the said planar face (7A) of the duct (4); and
- a deployed position in which, while being partially arranged on the said planar face (7A), it protrudes from the duct (4) at its air inlet end (5).

2. Air intake according to Claim 1,
**characterized in that** the said actuating means (10) comprise:
- a system (11) involving collaborating rail (12) and slide (13), which is intended to secure the ramp (8) to the said duct (4), while at the same time allowing the said ramp (8) to move; and
- means (14) of moving and fixing the said moving ramp (8).

3. Air intake according to Claim 2,
**characterized in that** the said means (14) of moving and fixing the moving ramp (8) comprise:
- a geared motor unit (15) which can be operated electrically, and is able to move the moving ramp (8) with the aid of an assembly formed of a rack (17) and of a pinion (16), so as to convey it into one of the said stable positions, and able to fix the said ramp (8) with respect to the said duct (4) in one of the said stable positions; and
- operating means (20) for electrically operating the said geared motor unit (15).

4. Air intake according to Claim 3,
**characterized in that** the said operating means (20) for electrically operating the said geared motor unit (15) are connected by an electric connection (21) to the latter and are arranged some distance from the said geared motor unit (15).

5. Air intake according to any one of the preceding claims,
**characterized in that** the said ramp (8) comprises a planar first part (9A) intended to be arranged on the said planar face (7A) of the duct and at least one second part (9B) which is connected to the said planar first part (9A) roughly at right angles and which has at least one through-opening (22) which, when the ramp (8) is in the said deployed position, is situated beyond the duct (4) at the air inlet end (5).

6. Flying device, particularly a missile, comprising at least one air intake (1) for conveying air from the outside into the said flying device (3),
**characterized in that** the said air intake (1) is of the type specified in any one of Claims 1 to 5.

## Patentansprüche

1. Lufteinlasskanal zur Beförderung von Luft, wobei diese Lufteinlasskanal (1) Folgendes umfasst:
- eine langgestreckte Leitung (4), die ein Lufteinlassende (5) und ein Luftauslassende (6) besitzt und die mindestens eine im Wesentlichen ebene Seite (7A) umfasst;
- eine bewegliche Rampe (8), die ein langgestrecktes Tragwerk (9) umfasst, das zumindest teilweise eben ist, und die durch Verschiebung auf dieser ebenen Seite (7A) entlang der genannten Leitung (4) bewegt werden kann; und
- steuerbare Betätigungsmittel (10) zum Verschieben der beweglichen Rampe (8);
**dadurch gekennzeichnet; dass** das langgestreckte Tragwerk (9) der beweglichen Rampe (8) außen an der ebenen Seite (7A) der Leitung (4) angeordnet ist, und dadurch, dass die bewegliche Rampe (8) mit Hilfe der genannten Betätigungsmittel (10) in eine von zwei stabilen Stellungen bewegt werden kann, in denen sie in Bezug auf die Leitung (4) fest ist:
• eine eingezogene Stellung, in der sie in Bezug auf das Lufteinlassende (5) an der ebenen Seite (7A) der Leitung (4) zurückgesetzt ist; und
• eine ausgefahrene Stellung, in der sie sich, wobei sie teilweise an den ebenen Seite (7A) angeordnet ist, am Lufteinlassende (5) der Leitung (4) über diese hinaus erstreckt.

2. Lufteinlasskanal nach Anspruch 1,
**dadurch gekennzeichnet, dass** die genannten Betätigungsmittel (10) Folgendes umfassen:
- ein System (11) mit zusammenwirkender Schiene (12) und Gleitbahn (13), das die genannte Rampe (8) fest mit der Leitung (4) verbinden soll und dabei die Verschiebung der Rampe (8) gestattet; und
- Mittel zur Verschiebung und Befestigung (14) der beweglichen Rampe (8).

3. Lufteinlasskanal nach Anspruch 2,
**dadurch gekennzeichnet, dass** die genannten Mittel zur Verschiebung und Befestigung (14) der beweglichen Rampe (8) Folgendes umfassen:
- einen Getriebemotor (15), der elektrisch gesteuert werden und die bewegliche Rampe (8) mit einer Einheit bewegen kann, die von einem Zahnrad (16) und einer Zahnstange (17) gebildet wird, um die Rampe in Bezug auf die Leitung (4) in eine der stabilen Stellungen zu bringen und die Rampe (8) in Bezug auf die Leitung (4) in einer der stabilen Stellungen zu fixieren; und
- Steuermittel (20) zur elektrischen Steuerung des Getriebemotors (15).

4. Lufteinlasskanal nach Anspruch 3,
**dadurch gekennzeichnet, dass** die Steuermittel (20) zur elektrischen Steuerung des Getriebemotors (15) über eine elektrische Verbindung (21) mit letzterem verbunden und in entfemt vom genannten Getriebemotor (15) angeordnet sind.

5. Lufteinlasskanal nach einem der vorstehenden Ansprüche,
**dadurch gekennzeichnet, dass** die Rampe (8) einen ersten ebenen Teil (9A) besitzt, der an der genannten ebenen Seite (7A) der Leitung angeordnet werden soll, und zumindest einen zweiten Teil (9B), der mit dem genannten ersten ebenen Teil (9A) im Wesentlichen rechtwinklig verbunden ist und mindestens eine durchgehende Öffnung (22) aufweist, die in der ausgefahrenen Stellung der Rampe (8) am Lufteinlassende (5) jenseits der Leitung (4) liegt.

6. Flugkörper, insbesondere eine Rakete, der mindestens einen Lufteinlasskanal (1 ) umfasst, um Luft aus der Außenumgebung in den Flugkörper (3) zu leiten,
**dadurch gekennzeichnet, dass** der Lufteinlasskanal (1) von der Art ist, die in einem der Ansprüche 1 bis 5 spezifiziert ist.
